# EUROPÄISCHE PATENTSCHRIFT

(11) **EP 2 006 152 B1**
(45) Veröffentlichungstag und Bekanntmachung des Hinweises auf die Patenterteilung: **21.11.2012**
(21) Anmeldenummer: 08004539.6
(22) Anmeldetag: 12.03.2008
(51) Int. Cl.: B60N 2/70, B60N 2/44

(54) **Kissen für ein Kraftfahrzeug, Kraftfahrzeugsitz mit einem solchen Kissen und Verfahren zur Herstellung eines solchen Kissens**
Cushion for a motor vehicle, motor vehicle seat with such a cushion and method for manufacturing such a cushion
Coussin pour un véhicule automobile, siège de véhicule automobile doté d'un tel coussin et procédé de fabrication d'un tel coussin

(30) Priorität: 06.06.2007 DE 102007026368
(43) Veröffentlichungstag der Anmeldung: 24.12.2008
(73) Patentinhaber: GM Global Technology Operations LLC, Detroit, MI 48265-3000 (US)
(72) Erfinder: Maier, Jürgen, 67808 Weitersweiler (DE); Vötz, Reimer, 65428 Rüsselsheim (DE)
(74) Vertreter: Strauss, Peter

(56) Entgegenhaltungen:
- DE-A1-102005 012 987
- GB-A- 2 344 514
- US-A- 4 965 899
- US-A1- 2006 254 692
- US-B1- 6 398 303

## Beschreibung

Die vorliegende Erfindung betrifft ein Kissen für den Kraftfahrzeuginnenraum, insbesondere für einen Kraftfahrzeugsitz, mit mindestens einem innenliegenden Luftsack und einem den Luftsack umgebenden Schaumstoffkörper. Die vorliegende Erfindung betrifft ferner einen Kraftfahrzeugsitz mit einem solchen Kissen sowie ein Verfahren zur Herstellung eines solchen Kissens.

Aus dem Stand der Technik sind unterschiedliche Kissen für den Kraftfahrzeuginnenraum bekannt, die einen aufblasbaren und/oder evakuierbaren Luftsack aufweisen. Die bekannten Kissen, die dem Komfort oder der Sicherheit des Fahrzeuginsassen dienen, sind dabei beispielsweise an den Kraftfahrzeugsitzen oder den Innenseiten der Fahrzeugwand angeordnet.

So beschreibt die DE 199 10 427 A1 einen Kraftfahrzeugsitz mit einem Vakuumkissen, das aus mehreren Segmenten besteht, wobei in den einzelnen Segmenten rieselfähiges Schüttgut eingebracht ist. Das Vakuumkissen weist dabei eine Schicht aus luftundurchlässigem Material auf, so dass das Vakuumkissen evakuiert werden kann. Durch Evakuieren des Vakuumkissens wird die äußere Hülle zusammengezogen und das rieselfähige Schüttgut verfestigt und fixiert. Die Verfestigung und Fixierung ist jedoch reversibel, was durch ein erneutes Belüften des Vakuumkissens bewirkt werden kann. Das bekannte Vakuumkissen kann den Fahrzeuginsassen besonders gleichmäßig abstützen, hat jedoch den Nachteil, dass die luftundurchlässige Schicht leicht beschädigt werden kann und der Sitzkomfort trotz einer weiteren, dem Fahrzeuginsassen zugewandten Gewebeschicht, eingeschränkt ist.

Die WO 01/13767 A1 beschreibt einen weiteren Fahrzeugsitz. Der bekannte Fahrzeugsitz weist ein Sitzteil und eine Rückenlehne auf, die mit mehreren aufblasbaren Luftzellen versehen sind. Die aufblasbaren Luftzellen sind jeweils an der dem Fahrzeuginsassen zugewandten Oberfläche des Sitzteils bzw. der Rückenlehne angeordnet, so dass diese in direkten Kontakt mit dem Fahrzeuginsassen treten. Die aufblasbaren Luftzellen sollen den Sitzkomfort erhöhen, haben jedoch wiederum den Nachteil, dass die luftundurchlässige Haut der aufblasbaren Luftzelle leicht beschädigt werden kann.

Aus der DE 299 24 138 U1 ist ein weiterer Kraftfahrzeugsitz bekannt, dessen Sitzteil eine Polsterschicht aufweist, auf der der Fahrzeuginsasse Platz nehmen kann und unterhalb derer ein Hohlraum vorgesehen ist. In dem Hohlraum ist wiederum eine aufblasbare Luftpolsterung angeordnet, wobei die als aufblasbarer Sack ausgebildete Luftpolsterung am Boden unter dem Kraftfahrzeugsitz nicht aber an der Polsterschicht befestigt ist. Diese Ausführungsform ist insofern von Vorteil, als dass die Luftpolsterung besser gegen Beschädigungen geschützt ist. Nachteilig ist jedoch, dass sich die Form der Polsterschicht nur langsam oder auch nur bei äußerer Belastung an die durch die Luftpolsterung vorgegebene Form anpasst, so dass der Fahrzeuginsasse die jeweils eingestellte Härte oder Form des Sitzteils nur schwer abschätzen kann, bevor dieser auf dem Fahrzeugsitz Platz nimmt.

Ein weiterer Kraftfahrzeugsitz mit einem Kissen ist aus der DE 198 06 535 C2 bekannt. Das Kissen des Sitzteils umfasst hierbei eine Polsterung und mehrere in der Polsterung angeordnete Blasen, die mit einem Fluid befüllbar sind. Zu diesem Zweck sind die Blasen mit einem Fluiddruckeinstellungssystem verbunden. Die Blasen sind dabei auf irgendeine geeignete, herkömmliche Art und Weise gehalten. Auch hier ist nicht sichergestellt, dass sich die Form der Polsterschicht in jeder Situation an die durch die Blasen vorgegebene Form schnell und sicher anpasst.

Die GB 2 344 514 A, die als nächstliegender Stand der Technik betrachtet wird, offenbart ein Kissen für einen Fahrzeugsitz mit mindestens einem luftdichten, innenliegenden Luftsack und einem den Luftsack umgebenden Schaumstoffkörper, wobei der Luftsack von dem Schaumstoffkörper umschäumt und unlösbar mit diesem verbunden ist.

Das bekannte Kissen ist insofern nachteilig, als dass dieses schlecht belüftbar ist, wodurch der Sitzkomfort für den Fahrzeuginsassen eingeschränkt ist.

Es ist daher eine Aufgabe der vorliegenden Erfindung, ein Kissen für den Kraftfahrzeuginnenraum, insbesondere für einen Kraftfahrzeugsitz, zu schaffen, das einerseits eine gute Belüftung gewährleistet und andererseits einfach und Material sparend herstellbar ist. Der Erfindung liegt ferner die Aufgabe zugrunde, einen Kraftfahrzeugsitz mit einem solchen Kissen zu schaffen. Eine weitere Aufgabe der Erfindung besteht darin, ein Verfahren zur Herstellung eines solchen Kissens anzugeben.

Diese Aufgabe wird durch die in den Patentansprüchen 1, 14 bzw. 15 angegebenen Merkmale gelöst. Vorteilhafte Ausführungsformen der Erfindung sind Gegenstand der Unteransprüche.

Das erfindungsgemäße Kissen für einen Kraftfahrzeuginnenraum kann beispielsweise für einen Kraftfahrzeugsitz oder die Wand des Kraftfahrzeuginnenraums konzipiert sein, um dem Fahrzeuginsassen sowohl Fahrkomfort als auch Sicherheit zu bieten. Das Kissen weist mindestens einen luftdichten innenliegenden Luftsack auf. So kann der Luftsack beispielsweise in der Art eines Ballons ausgebildet sein. Auch wären beispielsweise mehrere Luftsäcke denkbar, die unabhängig voneinander ansteuerbar sind. Das Kissen umfasst ferner einen den Luftsack umgebenden Schaumstoffkörper. Der Schaumstoffkörper kann den Luftsack beispielsweise vollständig umgeben, in jedem Fall sollte die dem Fahrzeuginsassen zugewandte Fläche des Luftsacks von dem Schaumstoffkörper umgeben sein. Der Schaumstoffkörper ist unlösbar mit dem Luftsack verbunden, indem der Luftsack von dem Schaumstoffkörper umschäumt ist, wodurch ein kostengünstig und einfach herstellbares Kissen zur Verfügung gestellt werden kann. Lediglich eine Zerstörung der Verbindung kann somit zur Trennung von Luftsack und Schaumstoffkörper führen. Der Luftsack weist mindestens eine durchgehende Röhre auf, mittels derer eine Strömungsverbindung zwischen einer Außenseite des Luftsacks und einer anderen Außenseite des Luftsacks erzeugt ist. Die durchgehende Röhre umgibt dabei einen mit Luft gefüllten Hohlraum. Die durchgehende Röhre ist zu beiden Außenseiten mit jeweils einer luftdurchlässigen Membran verschlossen.

Während der den Luftsack umgebende Schaumstoffkörper einen sicheren Schutz des Luftsacks vor Beschädigungen gewährleistet, bewirkt die unlösbare Verbindung zwischen dem Luftsack und dem Schaumstoffkörper, dass sich der Schaumstoffkörper - und somit das gesamte Kissen - stets und schnell an die sich verändernde Form des Luftsacks anpasst. Der Luftsack des erfindungsgemäßen Kissens kann beispielsweise evakuiert werden, so dass sich der Schaumstoffkörper zusammen mit dem Luftsack verkleinert. Auch wird die Verbindung zwischen Luftsack und Schaumstoffkörper gleichzeitig mit der Herstellung des Schaumstoffkörpers selbst erzeugt, wodurch die Herstellung vereinfacht ist. Die durchgehende Röhre ermöglicht einen einfachen und sicheren Luftaustausch zwischen den Außenseiten, was bei der Verwendung des Kissens an einem Kraftfahrzeugsitz zu einer guten Belüftung des Kraftfahrzeugsitzes führt. Ferner kann die durchgehende Röhre zur Stabilisierung des aufgeblasenen Luftsackes beitragen. Indem der Hohlraum der durchgehenden Röhre mit Luft gefüllt ist, wird einerseits eine besonders gute Belüftung des Kissens bewirkt, während andererseits ein Kissen geschaffen wird, dessen Herstellungskosten durch Materialeinsparung reduziert sind, zumal kein teurer Schaumstoff in die durchgehende Röhre eingebracht ist. Dank der luftdurchlässigen Membranen kann auf einfache Weise ein Kissen mit umschäumtem Luftsack geschaffen werden, zumal die luftdurchlässige Membran ein Eindringen des Schaums in den Hohlraum in den durchgehenden Röhren verhindert. Dennoch bleibt die gute Belüftung des Kissens aufgrund der Luftdurchlässigkeit der Membran erhalten.

In einer bevorzugten Ausführungsform des erfindungsgemäßen Kissens ist mittels der Röhre eine Strömungsverbindung zwischen einer ersten Außenseite und einer der ersten Außenseite abgewandten zweiten Außenseite des Luftsackes erzeugt.

In einer bevorzugten Ausführungsform des erfindungsgemäßen Kissens ist der Schaumstoffkörper flächig mit der Außenseite des Luftsacks verbunden. Eine flächige Verbindung, die beispielsweise durch Verkleben erzielt werden kann, ist ein besonders starker Zusammenhalt zwischen Schaumstoffkörper und Luftsack gewährleistet, wobei ferner eine gute gegenseitige Anpassung sichergestellt ist.

In einer weiteren bevorzugten Ausführungsform des erfindungsgemäßen Kissens ist der Schaumstoffkörper stoffschlüssig mit dem Luftsack verbunden, zumal stoffschlüssige Verbindungen einen besonders sicheren Zusammenhalt zwischen dem Luftsack einerseits und dem umgebenden Schaumstoffkörper andererseits gewährleisten können.

Um den Komfort, die Größe oder die Lage des Kissens beeinflussen zu können, kann das Volumen und die Form des Kissens in einer vorteilhaften Ausführungsform des erfindungsgemäßen Kissens durch Aufblasen und/oder Evakuieren des Luftsacks verändert werden. Insbesondere beim Evakuieren ist aufgrund der unlösbaren Verbindung eine schnelle und sichere Anpassung des Schaumstoffkörpers an den Luftsack gewährleistet.

Grundsätzlich kann der Luftsack vollständig luftdicht geschlossen sein. In einer weiteren vorteilhaften Ausführungsform des erfindungsgemäßen Kissens weist der Luftsack jedoch eine verschließbare Öffnung zum Zuführen und/oder Abführen von Luft auf, um ein Aufblasen und/oder Evakuieren zu ermöglichen. Die verschließbare Öffnung kann beispielsweise mit einem steuerbaren Ventil verschlossen sein.

In einer weiteren vorteilhaften Ausführungsform des erfindungsgemäßen Kissens kann die verschließbare Öffnung mit der Zuführleitung und/oder Abführleitung einer Pumpe verbunden werden.

Gemäß einer weiteren vorteilhaften Ausführungsform des erfindungsgemäßen Kissens kann der Luftdruck innerhalb des Luftsackes verändert werden. Auf diese Weise kann beispielsweise bei einem Kraftfahrzeugsitz die Härte des Kissens und somit der Sitzkomfort über den Druck innerhalb des Luftsackes eingestellt werden.

In einer weiteren bevorzugten Ausführungsform des erfindungsgemäßen Kissens hat der Schaumstoffkörper eine Ausgangsform und ist derart ausgebildet, dass der Schaumstoffkörper im unbelasteten Zustand bei geöffnetem Luftsack wieder die Ausgangsform annimmt. Unter dem unbelasteten Zustand kann beispielsweise verstanden werden, dass kein Fahrzeugsinsasse gegen das Kissen drückt oder darauf sitzt. Der geöffnete Luftsack verhindert, dass sich innerhalb des Luftsackes ein Unterdruck bildet, der ein Zurückkehren des Schaumstoffkörpers in die Ausgangsform unterbinden würde.

In einer weiteren bevorzugten Ausführungsform des erfindungsgemäßen Kissens ist die durchgehende Röhre von der Wand des Luftsackes ausgebildet. Auf diese Weise wird die Röhre gleich bei der Herstellung des Luftsackes selbst von einem Teil desselben erzeugt.

Um mit Hilfe der durchgehenden Röhre eine besonders hohe Stabilität des aufgeblasenen Luftsackes zu erreichen, weist die durchgehende Röhre in einer weiteren vorteilhaften Ausführungsform des erfindungsgemäßen Kissens einen kreisförmigen Querschnitt auf.

In einer weiteren besonders bevorzugten Ausführungsform des erfindungsgemäßen Kissens weist das Kissen eine Belastungsseite auf, die durch einen Fahrzeuginsassen belastet werden kann, wobei sich die durchgehende Röhre senkrecht zu der Belastungsseite erstreckt. Auf diese Weise wird eine höhere Festigkeit des Kissens in Belastungsrichtung erzielt. Sollte das Kissen als Sitzteil eines Kraftfahrzeugsitzes fungieren, so würde die Belastungsseite beispielsweise der Sitzfläche des Sitzteils entsprechen.

Um den vorgenannten Vorteil weiter zu verstärken, weist das Kissen in einer weiteren bevorzugten Ausführungsform des erfindungsgemäßen Kissens eine Stützseite auf, die an einem Kraftfahrzeugteil abgestützt werden kann, wobei sich die durchgehende Röhre senkrecht zu der Stützseite erstreckt. Um bei dem zuvor genannten Beispiel zu bleiben, entspräche die Stützseite des als Sitzteil verwendeten Kissens beispielsweise der Unterseite des Sitzteils, die an dem Gestell des Kraftfahrzeugsitzes abgestützt ist.

Der erfindungsgemäße Kraftfahrzeugsitz weist ein erfindungsgemäßes Kissen der zuvor beschriebenen Art auf, wobei das Kissen als Bestandteil des Sitzteils, der Rückenlehne und/oder der Kopfstütze ausgebildet ist.

Bei dem erfindungsgemäßen Verfahren zur Herstellung des erfindungsgemäßen Kissens wird ein Luftsack unlösbar mit einem umgebenden Schaumstoffkörper verbunden. Das erfindungsgemäße Verfahren umfasst wenigstens die Verfahrensschritte Bereitstellen eines Luftsackes mit mindestens einer durchgehenden Röhre, mittels derer eine Strömungsverbindung zwischen einer Außenseite des Luftsackes und einer anderen Außenseite des Luftsackes erzeugt ist, die einen mit Luft gefüllten Hohlraum umgibt und die zu beiden Außenseiten mit jeweils einer luftdurchlässigen Membran verschlossen ist, Umschäumen des Luftsackes und Aushärten des Schaums unter Erzeugung des unlösbar mit dem Luftsack verbundenen Schaumstoffkörpers. Hier wird die unlösbare Verbindung zwischen Schaumstoffkörper und Luftsack bereits durch die Herstellung des Schaumstoffkörpers erzeugt, wodurch die Herstellung wesentlich vereinfacht ist. Bezüglich der Vorteile des Verfahrens sowie der Vorteile der bevorzugten Ausführungsformen desselben sei auf die Vorteile des vorangehend beschriebenen Kissens verwiesen, die analog gelten.

In einer bevorzugten Ausführungsform des erfindungsgemäßen Verfahrens wird der Luftsack vor dem Umschäumen aufgeblasen. Auf diese Weise ist bei einem vollständig aufgeblasenen Luftsack mit nichtelastischer Wand auch gleich die maximal mögliche Ausdehnung des Schaumstoffkörpers vorgegeben.

Gemäß einer vorteilhaften Ausführungsform des erfindungsgemäßen Verfahrens wird der Luftsack vor dem Umschäumen in eine Form zur Formgebung des Schaumstoffkörpers eingebracht. Durch die Form kann die Außenkontur des Schaumstoffkörpers in vorteilhafter Weise vorgegeben werden.

Die Erfindung wird im Folgenden anhand von beispielhaften Ausführungsformen unter Bezugnahme auf die beigefügten Zeichnungen näher erläutert. Es zeigen:
- Fig. 1: eine perspektivische Darstellung einer Ausführungsform des erfindungsgemäßen Kissens mit aufgeblasenem Luftsack in geschnittener Darstellung,
- Fig. 2: das Kissen von Fig. 1 mit teilweise evakuiertem Luftsack,
- Fig. 3: eine Querschnittsansicht des in eine Form eingebrachten Luftsackes zur Veranschaulichung einer Ausführungsform des erfindungsgemäßen Herstellungsverfahrens und
- Fig. 4: die Querschnittsansicht von Fig. 3 mit umschäumtem Luftsack.

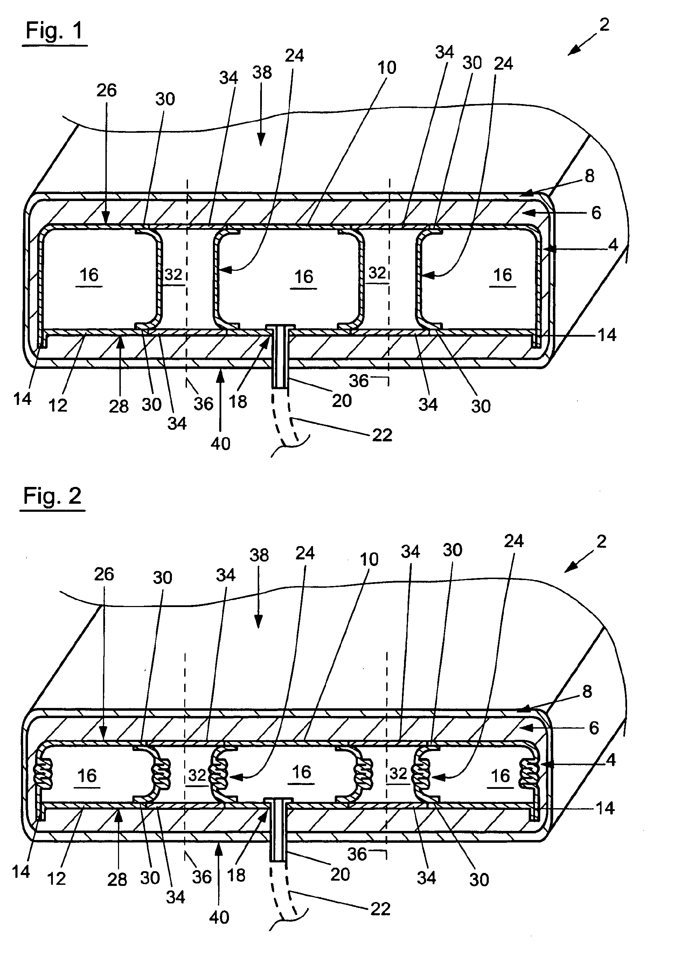

Fig. 1 zeigt ein Kissen 2 für einen Kraftfahrzeuginnenraum. Das dargestellte Kissen 2 ist dabei als Kissen für das Sitzteil, die Rückenlehne oder die Kopfstütze eines nicht dargestellten Kraftfahrzeugsitzes ausgebildet. Das Kissen 2 umfasst im Wesentlichen einen innenliegenden Luftsack 4 und einen den Luftsack 4 umgebenden Schaumstoffkörper 6. Der Schaumstoffkörper 6, der den Luftsack 4 im vorliegenden Beispiel vollständig umgibt, ist ferner mit einem Bezug 8 umspannt, der aus einem Gewebe gefertigt ist.

Der Luftsack 4 ist im Wesentlichen aus zwei luftundurchlässigen, nichtelastischen, verformbaren Folien gebildet, nämlich aus einer oberen Folie 10 und einer unteren Folie 12, die über eine randseitige, umlaufende Dichtnaht 14 derart miteinander verbunden sind, dass zwischen der oberen und der unteren Folie 10, 12 eine Luftkammer 16 des Luftsackes 4 ausgebildet ist.

In der unteren Folie 12 ist ferner eine verschließbare Öffnung 18 vorgesehen, durch die Luft zu- oder abgeführt werden kann. Zu diesem Zweck ist in der Öffnung 18 ein Anschlussteil 20 vorgesehen, das sich nach außen erstreckt und mit einer in Fig. 1 gestrichelt angedeuteten Zuführ- und Abführleitung 22 einer Pumpe (nicht dargestellt) verbunden werden kann. Über die Pumpe kann somit der Druck innerhalb der Luftkammer 16 des Luftsackes 4, der ansonsten luftdicht ausgebildet ist, verändert werden.

Der Luftsack 4 weist mehrere durchgehende Röhren 24 auf, die eine erste Außenseite 26 des Luftsackes 4, die von der oberen Folie 10 gebildet ist, mit einer zweiten Außenseite 28 des Luftsackes 4 verbindet, die von der unteren Folie 12 gebildet ist und der ersten Außenseite 26 abgewandt ist. Die durchgehende Röhre 24 ist dabei als Teil des Luftsackes 4 ausgebildet, indem die durchgehende Röhre 24 über umlaufende Dichtnähte 30 mit der oberen bzw. unteren Folie 10, 12 verbunden ist.

Die durchgehende Röhre 24, die in der dargestellten Ausführungsform einen kreisförmigen Querschnitt aufweist, umgibt einen mit Luft gefüllten Hohlraum 32. Die durchgehende Röhre 24 bzw. der Hohlraum 32 ist zu beiden Außenseiten 26, 28 mit jeweils einer luftdurchlässigen Membran 34 verschlossen, die an der oberen bzw. unteren Folie 10, 12 angeordnet ist. Die durchgehende Röhre 24 weist eine Längsachse auf, die in den Figuren mit dem Bezugszeichen 36 versehen ist.

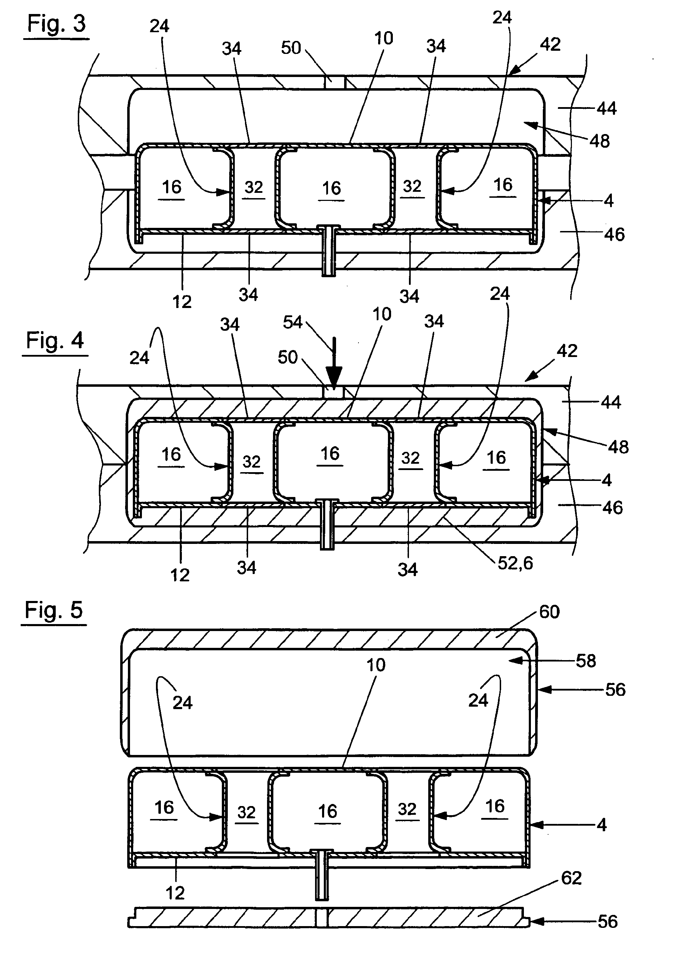

Der Schaumstoffkörper 6 ist unlösbar mit dem innenliegenden Luftsack 4 verbunden. Die stoffschlüssige Verbindung wurde bei der in den Fig. 1 und 2 dargestellten Ausführungsform durch Umschäumen des aufgeblasenen Luftsackes 4 erzeugt, wie dies später eingehender unter Bezugnahme auf die Fig. 3 und 4 geschildert wird. Der Schaumstoffkörper 6 ist dabei flächig mit der oberen und unteren Folie 10, 12 des Luftsackes 4 verbunden.

Das Kissen 2 weist eine obere Belastungsseite 38 und eine untere Stützseite 40 auf. Während die Belastungsseite 38 durch einen Fahrzeuginsassen belastbar ist, wie beispielsweise die Oberseite eines Sitzteils eines Kraftfahrzeugsitzes, kann die der Belastungsseite 38 gegenüberliegende Stützseite 40 an einem Teil des Kraftfahrzeugs abgestützt werden, wie beispielsweise dem Rahmen eines Kraftfahrzeugsitzes. Die Längsachse 36 der durchgehenden Röhre 24 erstreckt sich senkrecht zu der Belastungsseite 38 und der Stützseite 40 und gewährleistet auf diesem Wege eine hohe Stabilität des aufgeblasenen Luftsackes 4.

Wie aus Fig. 2 ersichtlich, kann das Volumen und die Form des Kissens 2 durch Aufblasen und Evakuieren des Luftsackes 4 über den Anschluss 20 verändert werden. So ist die Luftkammer 16 des Luftsackes 4 in Fig. 2 teilweise über den Anschluss 20 evakuiert und dann wieder verschlossen. Das Volumen des Luftsackes 4 hat sich dabei verringert, wobei der umgebende Schaumstoffkörper 6 dank der flächigen, unlösbaren Verbindung mit dem Luftsack 4 diese Verkleinerung und Formveränderung ebenfalls unmittelbar und schnell nachvollzieht.

In Fig. 1 ist der Schaumstoffkörper 6 in einer Ausgangsform dargestellt. Der Schaumstoffkörper 6 ist dabei derart ausgebildet, dass der Schaumstoffkörper 6 im unbelasteten Zustand bei geöffnetem Luftsack 4 wieder die Ausgangsform annimmt. Wird also die Öffnung 18 wieder geöffnet, so dass über den Anschluss 20 Luft in die Luftkammer 16 strömen kann, so weitet sich der Schaumstoffkörper 6 aufgrund seiner Formstabilität wieder auf und der sich gleichzeitig aufweitende Luftsack 4 saugt dadurch Luft über den Anschluss 20 in die Luftkammer 16.

Nachstehend wird eine Ausführungsform des erfindungsgemäßen Verfahrens unter Bezugnahme auf die Fig. 3 und 4 beschrieben, bei der der Luftsack 4 unlösbar mit dem umgebenden Schaumkörper 6 verbunden wird.

Bei der dargestellten Ausführungsform wird zunächst der Luftsack 4 bereitgestellt und in eine Form 42 zur Formgebung des Schaumstoffkörpers 6 eingebracht, die aus einer oberen Formhälfte 44 und einer unteren Formhälfte 46 besteht. Der in die Form 42 eingebrachte Luftsack 4 wird über den Anschluss 20 vollständig aufgeblasen und die beiden Formhälften 44, 46 werden unter Ausbildung eines Formraumes 48 zusammengefügt, wobei der Luftsack 4 in dem Formraum 48 angeordnet ist (Fig. 4).

Die obere Formhälfte 44 weist eine Einlassöffnung 50 auf, durch die anschließend der Schaum 52 in den Formraum 48 eingebracht wird, wie dies anhand des Pfeils 54 angedeutet ist. Auf diese Weise wird der Luftsack 4 vollständig umschäumt, zumal der aufgeblasene Luftsack 4 nicht oder nur über den Anschluss 20 oder nur an vereinzelten Stellen an der Wandung des Formraumes 48 abgestützt ist. Der in den Formraum 48 eingebrachte Schaum 52 härtet aus und bildet den Schaumstoffkörper 6 aus, wobei während des Aushärtens auch die unlösbare Verbindung mit dem Luftsack 4 erzeugt wird. Zu diesem Zweck kann auf die Außenseite auch ein zusätzliches Klebemittel aufgebracht werden, was allerdings nicht unbedingt erforderlich ist. Anschließend wird der Schaumstoffkörper 6 mitsamt dem innenliegenden Luftsack 4 aus der Form 42 entnommen, um mit dem Bezug 8 umspannt zu werden.

### Bezugszeichenliste

- 2: Kissen
- 4: Luftsack
- 6: Schaumstoffkörper
- 8: Bezug
- 10: obere Folie
- 12: untere Folie
- 14: Dichtnaht
- 16: Luftkammer
- 18: Öffnung
- 20: Anschluss
- 22: Zuführ- und Abführleitung
- 24: durchgehende Röhre
- 26: erste Außenseite des Luftsackes
- 28: zweite Außenseite des Luftsackes
- 30: Dichtnaht
- 32: Hohlraum
- 34: luftdurchlässige Membran
- 36: Längsachse der durchgehenden Röhre
- 38: Belastungsseite des Kissens
- 40: Stützseite des Kissens
- 42: Form
- 44: obere Formhälfte
- 46: untere Formhälfte
- 48: Formraum
- 50: Einlassöffnung
- 52: Schaum
- 54: Pfeil

## Patentansprüche

1. Kissen (2) für den Kraftfahrzeuginnenraum, insbesondere für einen Kraftfahrzeugsitz, mit mindestens einem luftdichten, innenliegenden Luftsack (4) und einem den Luftsack (4) umgebenden Schaumstoffkörper (6), wobei der Luftsack (4) von dem Schaumstoffkörper (6) umschäumt und der Schaumstoffkörper (6) unlösbar mit dem Luftsack (4) verbunden ist, **dadurch gekennzeichnet, dass** der Luftsack (4) mindestens eine durchgehende Röhre (24) aufweist, mittels derer eine Strömungsverbindung zwischen einer Außenseite (26) des Luftsackes (4) und einer anderen Außenseite (28) des Luftsackes (4) erzeugt ist, wobei die durchgehende Röhre (24) einen mit Luft gefüllten Hohlraum (32) umgibt und zu beiden Außenseiten (26, 28) mit jeweils einer luftdurchlässigen Membran (34) verschlossen ist.

2. Kissen (2) nach Anspruch 1, **dadurch gekennzeichnet, dass** mittels der durchgehenden Röhre (24) eine Strömungsverbindung zwischen einer ersten Außenseite (26) und einer der ersten Außenseite (26) abgewandten zweiten Außenseite (28) des Luftsackes (4) erzeugt ist.

3. Kissen (2) nach einem der Ansprüche 1 oder 2, **dadurch gekennzeichnet, dass** der Schaumstoffkörper (6) flächig mit der Außenseite des Luftsackes (4) verbunden ist.

4. Kissen (2) nach einem der Ansprüche 1 bis 3, **dadurch gekennzeichnet, dass** der Schaumstoffkörper (6) stoffschlüssig mit dem Luftsack (4) verbunden ist.

5. Kissen (2) nach einem der vorangehenden Ansprüche, **dadurch gekennzeichnet, dass** das Volumen und die Form des Kissens (2) durch Aufblasen und/oder Evakuieren des Luftsackes (4) veränderbar ist.

6. Kissen (2) nach einem der vorangehenden **Ansprüche, dadurch gekennzeichnet, dass** der Luftsack (4) eine verschließbare Öffnung (18) zum Zuführen und/oder Abführen von Luft aufweist.

7. Kissen (2) nach Anspruch 6**, dadurch gekennzeichnet, dass** die verschließbare Öffnung (18) mit der Zuführleitung und/oder Abführleitung einer Pumpe verbindbar ist.

8. Kissen (2) nach einem der vorangehenden Ansprüche, **dadurch gekennzeichnet, dass** der Luftdruck innerhalb des Luftsackes (4) veränderbar ist.

9. Kissen (2) nach einem der vorangehenden Ansprüche**, dadurch gekennzeichnet, dass** der Schaumstoffkörper (6) eine Ausgangsform hat und derart ausgebildet ist, dass der Schaumstoffkörper (6) im unbelasteten Zustand bei geöffnetem Luftsack (4) wieder die Ausgangsform annimmt.

10. Kissen (2) nach einem der vorangehenden Ansprüche, **dadurch gekennzeichnet, dass** die durchgehende Röhre (24) von der Wand des Luftsackes (4) ausgebildet ist.

11. Kissen (2) nach einem der vorangehenden Ansprüche, **dadurch gekennzeichnet, dass** die durchgehende Röhre (24) einen kreisförmigen Querschnitt aufweist.

12. Kissen (2) nach einem der vorangehenden Ansprüche, **dadurch gekennzeichnet, dass** das Kissen (2) eine Belastungsseite (38) aufweist, die durch einen Fahrzeuginsassen belastbar ist, wobei sich die durchgehende Röhre (24) senkrecht zu der Belastungsseite (38) erstreckt.

13. Kissen (2) nach Anspruch 12, **dadurch gekennzeichnet, dass** das Kissen (2) eine Stützseite (40) aufweist, die an einem Kraftfahrzeugteil abstützbar ist, wobei sich die durchgehende Röhre (24) senkrecht zu der Stützseite (40) erstreckt.

14. Kraftfahrzeugsitz mit einem Kissen (2) nach einem der vorangehenden Ansprüche, **dadurch gekennzeichnet, dass** das Kissen (2) als Bestandteil des Sitzteils, der Rückenlehne und/oder der Kopfstütze ausgebildet ist.

15. Verfahren zur Herstellung eines Kissens (2) nach einem der Ansprüche 1 bis 14 mit den Verfahrensschritten:
Bereitstellen eines luftdichten Luftsackes (4) mit mindestens einer durchgehenden Röhre (24), mittels derer eine Strömungsverbindung zwischen einer Außenseite (26) des Luftsackes (4) und einer anderen Außenseite (28) des Luftsackes (4) erzeugt ist, die einen mit Luft gefüllten Hohlraum (32) umgibt und die zu beiden Außenseiten (26, 28) mit jeweils einer luftdurchlässigen Membran (34) verschlossen ist,
Umschäumen des Luftsackes (4) und
Aushärten des Schaums unter Erzeugung eines unlösbar mit dem Luftsack (4) verbundenen, den Luftsack (4) umgebenden Schaumstoffkörpers (6).

16. Verfahren nach Anspruch 15, bei dem der Luftsack (4) vor dem Umschäumen aufgeblasen wird.

17. Verfahren nach Anspruch 15 oder 16, bei dem der Luftsack (4) vor dem Umschäumen in eine Form zur Formgebung des Schaumstoffkörpers (6) eingebracht wird.

## Claims

1. A cushion (2) for the motor vehicle interior, in particular for a motor vehicle seat, having at least one airtight internal airbag (4) and a foam body (6) enclosing the airbag (4), the airbag (4) being encased by the foam body (6) and the foam body (6) being permanently connected to the airbag (4), **characterized in that** the airbag (4) has at least one continuous tube (24), by means of which a flow connection is produced between one outer side (26) of the airbag (4) and another outer side (28) of the airbag (4), the continuous tube (24) enclosing a cavity (32) filled with air and being closed to each of both outer sides (26, 28) using an air-permeable membrane (34).

2. The cushion (2) according to Claim 1, **characterized in that** a flow connection between a first outer side (26) and a second outer side (28) of the airbag (4), which faces away from the first outer side (26), is produced by means of the continuous tube (24).

3. The cushion (2) according to one of Claims 1 or 2, **characterized in that** the foam body (6) is connected flatly to the outer side of the airbag (4).

4. The cushion (2) according to one of Claims 1 to 3, **characterized in that** the foam body (6) is materially bonded to the airbag (4).

5. The cushion (2) according to one of the preceding claims, **characterized in that** the volume and the shape of the cushion (2) are changeable by inflating and/or evacuating the airbag (4).

6. The cushion (2) according to one of the preceding claims, **characterized in that** the airbag (4) has a closable opening (18) for supplying and/or discharging air.

7. The cushion (2) according to Claim 6, **characterized in that** the closable opening (18) is connected to the supply line and/or discharge line of a pump.

8. The cushion (2) according to one of the preceding claims, **characterized in that** the air pressure within the airbag (4) is changeable.

9. The cushion (2) according to one of the preceding claims, **characterized in that** the foam body (6) has a starting shape and is designed such that the foam body (6) assumes the starting shape again in the unloaded state when the airbag (4) is open.

10. The cushion (2) according to one of the preceding claims, **characterized in that** the continuous tube (24) is formed by the wall of the airbag (4).

11. The cushion (2) according to one of the preceding claims, **characterized in that** the continuous tube (24) has a circular cross section.

12. The cushion (2) according to one of the preceding claims, **characterized in that** the cushion (2) has a load side (38), which can be loaded by a vehicle occupant, the continuous tube (24) extending perpendicularly to the load side (38).

13. The cushion (2) according to Claim 12, **characterized in that** the cushion (2) has a support side (40), which can be supported on a motor vehicle part, the continuous tube (24) extending perpendicularly to the support side (40).

14. A motor vehicle seat having a cushion (2) according to one of the preceding claims, **characterized in that** the cushion (2) is formed as a component of the seat part, the backrest, and/or the head support.

15. A method for producing a cushion (2) according to one of Claims 1 to 14 having the following method steps:
providing an airtight airbag (4) having at least one continuous tube (24), by means of which a flow connection is produced between one outer side (26) of the airbag (4) and
another outer side (28) of the airbag (4), which encloses a cavity (32) filled with air and is closed on each of both outer sides (26, 28) using an air-permeable membrane (34),
encasing the airbag (4) in foam, and
curing the foam while generating a foam body (6), which is permanently connected to the airbag (4) and encloses the airbag (4).

16. The method according to Claim 15, wherein the airbag (4) is inflated before it is encased in foam.

17. The method according to Claim 15 or 16, wherein the airbag (4) is introduced into a mold for shaping the foam body (6) before it is encased in foam.

## Revendications

1. Coussin (2) pour l'habitacle de véhicules, en particulier pour un siège de voiture, avec au moins une chambre à air (4) intérieure et hermétique à l'air et un corps en mousse (6) entourant la chambre a air (4), sachant que la chambre à air (4) est enveloppé dans le corps en mousse (6) et que le corps en mousse (6) est indissociable de la chambre à air (4), **caractérisé en ce que** la chambre à air (4) est traversée par au moins un tube de bout en bout (24) à l'aide duquel une liaison d'écoulement est réalisée entre un côté extérieur (26) de la chambre à air (4) et un autre côté extérieur (28) de la chambre à air (4), sachant que le tube de bout en bout (24) abrite une cavité (32) remplie d'air et qu'il est obturé des deux côtés extérieurs (26, 28) par une membrane (34) perméable à l'air.

2. Coussin (2) selon la revendication 1, **caractérisé en ce qu'**à l'aide du tube de bout en bout (24), une liaison d'écoulement est réalisée entre un premier côté extérieur (26) et un second côté extérieur (28) de la chambre à air (4), situé en face du premier côté extérieur (26).

3. Coussin (2) selon la revendication 1 ou 2, **caractérisé en ce que** le corps en mousse (6) est relié à la surface du côté extérieur de la chambre à air (4).

4. Coussin (2) selon l'une des revendications 1 à 3, **caractérisé en ce que** le corps en mousse (6) est relié à la chambre à air (4) par le tissu.

5. Coussin (2) selon l'une des revendications précédentes, **caractérisé en ce que** le volume et la forme du coussin (2) peuvent être modifiés en gonflant et/ou en dégonflant la chambre à air (4).

6. Coussin (2) selon l'une des revendications précédentes, **caractérisé en ce que** la chambre à air (4) présente une ouverture/fermeture (18) permettant d'introduire et/ou évacuer de l'air.

7. Coussin (2) selon la revendication 6, **caractérisé en ce que** l'ouverture/la fermeture (18) peut être reliée au conduit d'alimentation et/ou d'évacuation d'une pompe.

8. Coussin (2) selon l'une des revendications précédentes, **caractérise en ce que** la pression d'air peut être modifiée à l'intérieur de la chambre à air (4).

9. Coussin (2) selon l'une des revendications précédentes, **caractérisé en ce que** le corps en mousse (6) a une forme initiale et qu'il est conçu de telle sorte que le corps en mousse (6) reprend la forme initiale en l'absence de pression et lorsque la chambre à air (4) est ouverte.

10. Coussin (2) selon l'une des revendications précédentes, **caractérisé en ce que** le tube de bout en bout (24) est constitué par la paroi de la chambre à air (4).

11. Coussin (2) selon l'une des revendications précédentes, **caractérisé en ce que** le tube de bout en bout (24) présente une section de forme circulaire.

12. Coussin (2) selon l'une des revendications précédentes, **caractérisé en ce que** le coussin (2) présente un côté de charge (38) contraint par l'occupant du véhicule, sachant que le tube de bout en bout (24) s'étend à la verticale du côté de charge (38).

13. Coussin (2) selon la revendication 12, **caractérisé en ce que** le coussin (2) présente un côté d'appui (40) pouvant être posé sur une partie du véhicule, sachant que le tube de bout en bout (24) s'étend à la verticale du côté d'appui (40).

14. Siège de véhicule avec un coussin (2) selon l'une des revendications précédentes, **caractérisé en ce que** le coussin (2) est partie constituante de l'assise, du dossier et/ou de l'appui-tête.

15. Procédé de fabrication d'un coussin (2) selon l'une des revendications 1 à 14 comportant les étapes de production suivantes :
Préparation de la chambre à air (4) hermétique à l'air avec au moins un tube de bout en bout (24) à l'aide duquel une liaison d'écoulement est réalisée entre un côté extérieur (26) de la chambre à air (4) et un autre côté extérieur (28) de la chambre à air (4), laquelle abrite une cavité (32) remplie d'air et est obturée de chaque côté extérieur (26, 28) par une membrane (34) perméable à l'air,
Enveloppage de la chambre à air (4) avec la mousse et
Durcissement de la mousse de par la réalisation d'un corps en mousse (6) indissociable de la chambre à air (4) et enveloppant la chambre à air (4).

16. Procédé selon la revendication 15 au cours duquel la chambre à air (4) est gonflée avant d'être enveloppée de mousse.

17. Procédé selon la revendication 15 ou 16 au cours duquel la chambre à air (4) est mise en forme avant d'être enveloppée de mousse afin de donner sa forme au corps en mousse (6)
